(19) Europäisches Patentamt
European Patent Office
Office européen des brevets

(11) EP 1 155 046 B1

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(21) Anmeldenummer: **99967939.2**

(22) Anmeldetag: **14.12.1999**

(51) Int Cl.[7]: **C08F 4/00**, C08F 293/00

(86) Internationale Anmeldenummer:
**PCT/EP1999/009933**

(87) Internationale Veröffentlichungsnummer:
**WO 2000/035962 (22.06.2000 Gazette 2000/25)**

(54) **VERFAHREN ZUR LEBENDEN FREIEN RADIKALISCHEN POLYMERISATION**

METHOD FOR LIVING FREE-RADICAL POLYMERIZATION

PROCEDE POUR LA POLYMERISATION RADICALAIRE LIBRE VIVANTE

(84) Benannte Vertragsstaaten:
**AT BE CH CY DE DK ES FI FR GB GR IE IT LI LU MC NL PT SE**

(30) Priorität: **16.12.1998 DE 19858098**

(43) Veröffentlichungstag der Anmeldung:
**21.11.2001 Patentblatt 2001/47**

(73) Patentinhaber: **BASF AKTIENGESELLSCHAFT**
**67056 Ludwigshafen (DE)**

(72) Erfinder:
- **YANG, Yuliang**
  **Shanghai 200433 (CN)**
- **HE, Junpo**
  **Shanghai 200433 (CN)**
- **CAO, Jizhuang**
  **Shanghai 200433 (CN)**
- **CHEN, Jingming**
  **Shanghai 200433 (CN)**
- **LI, Chengming**
  **Shanghai 200433 (CN)**

(74) Vertreter: **Isenbruck, Günter, Dr.**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**EP-A- 0 726 280** **DE-A- 19 803 098**

- **BARTON, JAROSLAV ET AL: "Partitioned polymerization. 3. On the use of inhibitors partially soluble in the aqueous phase" , MAKROMOL. CHEM. (1989), 190(4), 769-75 XP002086582 See entire document.**
- **LIU, BING ET AL: "Well-defined multi-branch copolymer synthesis by "living" free radical polymerization" , HECHENG XIANGJIAO GONGYE (1999), 22(6), 373 XP000893053 See entire document.**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur lebenden freien radikalischen Polymerisation von ethylenisch ungesättigten Monomeren in Gegenwart eines stabilen N-Oxyl-Radikals.

Radikalisch initiierte Polymerisationen von wenigstens eine ethylenisch ungesättigte Gruppe aufweisenden Monomeren weisen den Nachteil auf, daß das Molekulargewicht der Polymerketten mit dem Polymerisationsumsatz normalerweise nicht zunimmt und daß die Polymerketten des resultierenden Polymerisats in der Regel kein einheitliches Molekulargewicht aufweisen. Das heißt, das erhältliche Polymerisat ist bezüglich der Eigenschaft Molekulargewicht in der Regel nicht monodispers, sondern weist üblicherweise einen diesbezüglichen Polydispersitätsindex PDI von ≥ 2 auf (PDI = $\overline{M}_w/\overline{M}_n$, mit $\overline{M}_w$ = gewichtsmittleres Molekulargewicht und $\overline{M}_n$ = zahlenmittleres Molekulargewicht). Dies ist vermutlich insbesondere auf Abbruchreaktionen infolge irreversibler Kombination wachsender freier radikalischer Polymerisationskettenenden sowie auch auf Kettenübertragungsreaktionen, Disproportionierung und Eliminierung zurückzuführen.

Ein weiterer Nachteil der klassischen radikalisch initiierten Polymerisation besteht darin, daß ein während der Polymerisation durchgeführter Wechsel der zu polymerisierenden Monomeren in der Regel nicht zu segmentierten Copolymerisaten (Blockpolymerisaten) führt. Beispielsweise führt ein Wechsel der Monomeren bei der Emulsionspolymerisation zu Kern/Schale-Polymerteilchen, deren Kern aus der einen und deren Schale aus der anderen Monomerensorte aufgebaut ist, wobei Kern und Schale im wesentlichen nicht chemisch, sondern lediglich physikalisch aneinander gebunden sind. Die Phasenanbindung der Schale an den Kern ist demnach bei der klassischen radikalischen Polymerisation in manchen Fällen unzureichend.

Aus dem Stand der Technik ist bekannt, daß die Durchführung von radikalisch initiierten Polymerisationen bei oberhalb 100°C liegenden Temperaturen in Anwesenheit eines stabilen (im wesentlichen nicht initiierend wirkenden) N-Oxyl-Radikals eine Kontrolle der radikalisch initiierten Polymerisation ermöglicht. Beispielsweise sind in der prioritätsälteren Anmeldung DE-A-19 803 098 radikalisch initiierte, wäßrige Emulsionspolymerisationen unter Verwendung von stabilen N-Oxyl-Radikalen offenbart.

Der zugrunde liegende Wirkmechanismus liegt vermutlich darin begründet, daß die stabilen N-Oxyl-Radikale reaktive radikalische Enden einer wachsenden Polymerisatkette bei erhöhten Temperaturen nicht irreversibel terminieren, sondern lediglich vorübergehend blockieren. Daraus resultiert eine Verringerung der stationären Konzentration wachsender freier radikalischer Polymerisatkettenenden, was die Möglichkeit für einen irreversiblen Abbruch des Kettenwachstums durch Kombination zweier wachsender Polymerisatkettenenden verringert. Dies führt im Mittel zu mit dem Polymerisationsumsatz (im Idealfall linear) wachsenden Polymerisatketten. Letzteres bedingt ein mit dem Polymerisationsumsatz (im Idealfall linear) wachsendes mittleres Molekulargewicht des gebildeten Polymerisats mit einem idealerweise bei 1 liegenden Polydispersitätsindex PDI. Gleichzeitig resultiert jedoch aus der Verringerung der stationären Konzentration wachsender freier radikalischer Polymerisationskettenenden eine sehr geringe Polymerisationsgeschwindigkeit..

Die Aufgabe der vorliegenden Erfindung ist es daher, in einer derartigen Polymerisation die Polymerisationsgeschwindigkeit zu erhöhen, vorzugsweise ohne die Polydispersität des entstehenden Polymerisats wesentlich zu erhöhen.

Diese Aufgabe wird durch ein Verfahren zur lebenden freien radikalischen Polymerisation eines oder mehrerer ethylenisch ungesättigter Monomere unter Verwendung mindestens eines radikalischen Polymerisationsinitiators und in Gegenwart eines oder mehrerer stabiler N-Oxyl-Radikale gelöst. Das erfindungsgemäße Verfahren ist dann dadurch gekennzeichnet, daß mindestens ein stabiles N-Oxyl-Radikal polymerisierbare Doppelbindungen aufweist.

Die Verfügbarkeit einer in einfacher Weise durchzuführenden schnellen, kontrollierten radikalisch initiierten Polymerisation zur Herstellung von Polymerisaten wäre insofern von Vorteil, als sie eine kontrollierte Einstellung des Molekulargewichts des Polymerisats in angemessenen Reaktionszeiten ermöglichen würde. Des weiteren eröffnet sie den unmittelbaren Zugang zu Blockcopolymerisaten, da die freien radikalischen Polymerisatkettenenden nicht durch Kombination zerstört, sondern lediglich reversibel blockiert werden. Das heißt, nach Verbrauch einer ersten Monomerensorte kann die Polymerisation bei Zusatz weiterer Monomerensorten fortgesetzt werden.

Weiterhin werden durch eine Erhöhung der Polymersationsgeschwindigkeit bei gleichzeitiger Ausnutzung der Vorteile stabiler N-Oxyl-Radikale die langen Polymerisationszeiten reduziert. Es wird somit ein in der Praxis anwendbares, wirtschaftliches Verfahren bereitgestellt.

Erfindungsgemäß wird in der Polymerisation mindestens ein stabiles N-Oxyl-Radikal eingesetzt, das polymerisierbare Doppelbindungen aufweist.

Der vermutliche Mechanismus geht davon aus, daß aufgrund der polymerisierbaren Doppelbindungen das stabile N-Oxyl-Radikal zusammen mit den ethylenisch ungesättigten Monomeren an der Polymerisation teilnehmen kann. Gleichzeitig kann das stabile N-Oxyl-Radikal reaktive radikalische Enden einer wachsenden Polymerisatkette vorrübergehend blockieren und so zu einer Verringerung der stationären Konzentration wachsender freier radikalischer Polymerisatkettenenden führen und so die Möglichkeit für einen irreversiblen Abbruch des Kettenwachstums durch

Kombination zweier wachsender Polymerisatkettenenden verringern. Durch die Polymerisation der stabilen N-Oxyl-Radikale wird die Konzentration an freien stabilen N-Oxyl-Radikalen im Verlauf der Polymerisation geringer und weniger Polymerisatkettenenden werden reversibel blockiert. Das hat eine Erhöhung der Reaktionsgeschwindigkeit zur Folge.

Als stabiles N-Oxyl-Radikal mit polymerisierbaren Doppelbindungen wird eine Verbindung der allgemeinen Formel I oder II oder eine Mischung davon eingesetzt.

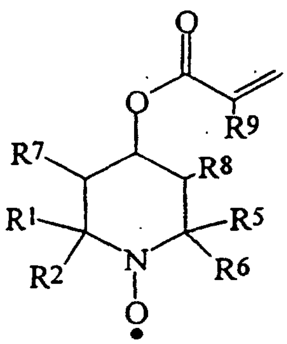

(I)

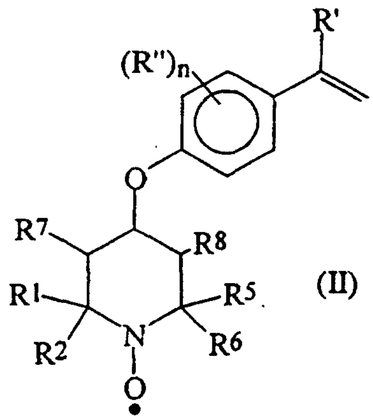

(II)

mit

$R^1$, $R^2$, $R^5$, $R^6$ = unabhängig voneinander gleiche oder verschiedene gerad- oder verzweigtkettige, gegebenenfalls substituierte Alkylgruppen mit 1 bis 32 Kohlenstoffatomen, wobei $R^1$ und $R^2$ bzw. $R^5$ und $R^6$ ein Ringsystem bilden können;

$R^7$, $R^8$ = unabhängig voneinander

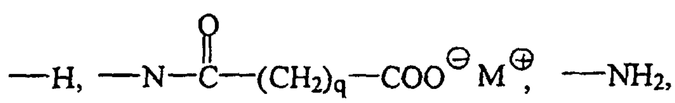

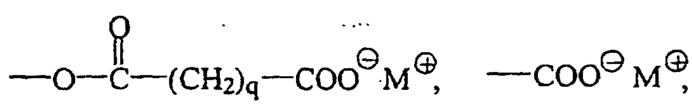

$$-SO_3^{\ominus} M^{\oplus}, -PO_3^{\ominus} M^{\oplus}, -O-PO_3^{2\ominus} M_2^{\oplus},$$

$$-O-SO_3^{\ominus} M^{\oplus}, -OH, -O-(CH_2-CH_2-O)_q-H,$$

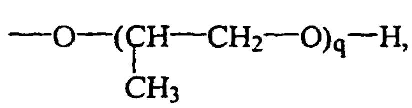

$M^+$ = Wasserstoff- oder ein Alkalimetallion,

q = eine ganze Zahl von 1 bis 10; und

$R^9$ in Formel I = Wasserstoff oder $C_1$- bis $C_8$-Alkyl; und

R' und R" in Formel II = unabhängig voneinander Wasserstoff oder $C_1$- bis $C_8$-Alkyl und n = 0, 1, 2 oder 3.

Bevorzugt sind

$R^1$, $R^2$, $R^5$, $R^6$ sowie $R^9$ in Formel I = . unabhängig voneinander gleiche oder verschiedene gerad- oder verzweigtkettige, gegebenenfalls substituierte Alkylgruppen mit 1 bis 3 Kohlenstoffatomen.

Besonders bevorzugt sind $R^1$, $R^2$, $R^5$, $R^6$ sowie $R^9$ in Formel I Methylgruppen.

Ganz besonders bevorzugt wird eine Verbindung der Formel I mit $R^1$, $R^2$, $R^5$, $R^6$ und $R^9$ = Methyl und $R^7$ und $R^8$ = — H eingesetzt.

Demgemäß wird ganz besonders bevorzugt 4-Methacryloyloxy-2,2,6,6-tetramethylpiperidin-1-oxy (MTEMPO) eingesetzt. MTEMPO kann nach einem in T. Kurosaki, J. Polym. Sci.: Polym. Chem. Ed. 1972, 10, 3295 beschriebenen Verfahren hergestellt werden.

Das polymerisierbare Doppelbindungen aufweisende stabile N-Oxyl-Radikal, besonders bevorzugt MTEMPO, wird im allgemeinen in einem molaren Anteil von 0,05 bis 1 %, bevorzugt von 0,1 bis 1%, besonders bevorzugt von 0,2 bis 0,4 %, bezogen auf eingesetztes Monomer, eingesetzt.

Als weitere stabile N-Oxyl-Radikale, die zusammen mit dem polymerisierbare Doppelbindungen aufweisenden stabilen N-Oxyl-Radikal eingesetzt werden können, sind alle diejenigen geeignet, die in der prioritätsälteren, nicht vorveröffentlichten DE-A-19 803 098 genannt sind.

Vorzugsweise können als weitere stabile N-Oxyl-Radikale Verbindungen der allgemeinen Formel III, die sich von einem sekundären Amin ableiten, eingesetzt werden:

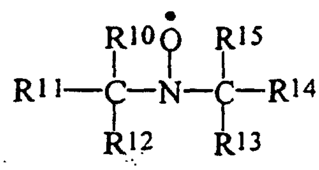 (III)

darin bedeuten $R^{10}$, $R^{11}$, $R^{14}$ und $R^{15}$ = gleiche oder verschiedene gerad- oder verzweigtkettige, gegebenenfalls substituierte Alkylgruppen und

$R^{12}$ und $R^{13}$ = gleiche oder verschiedene gerad- oder verzweigtkettige, gegebenenfalls substituierte Alkylgruppen oder $R^{12}CNCR^{13}$ = einen Teil einer cyclischen Struktur mit einem gegebenenfalls ankondensierten anderen gesättigten oder aromatischen Ring, wobei die cyclische Struktur oder der aromatische Ring gegebenenfalls substituiert sind.

Beipiele dafür sind stabile N-Oxyl-Radikale der allgemeinen Formel III, bei welchen $R^{10}$, $R^{11}$, $R^{14}$ und $R^{15}$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, Phenyl-, oder substituierte Gruppen hiervon und $R^{12}$ und $R^{13}$ für (gleiche oder verschiedene) Methyl-, Ethyl-, n-Propyl-, iso-Propyl-, n-Butyl-, iso-Butyl-, tert.-Butyl-, lineares oder verzweigtes Pentyl-, substituierte Gruppen hiervon oder - sofern $R^{12}CNCR^{13}$ einen Teil einer cyclischen Struktur bildet - die cyclische Struktur

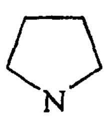 oder 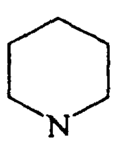 oder 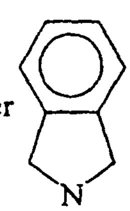 oder 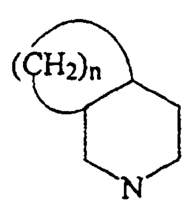 oder 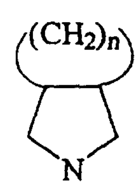

in der n = eine ganze Zahl von 1 bis 10, vorzugsweise 1 bis 6, einschließlich substituierter derartiger cyclischer Gruppen,

stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl- 1 -oxyl-piperidin genannt.

Die stabilen N-Oxyl-Radikale lassen sich aus den entsprechenden sekundären Aminen durch Oxidation, z. B. mit Wasserstoffperoxid, herstellen. In der Regel sind sie als Reinsubstanz darstellbar.

Weitere in dem erfindungsgemäßen Verfahren geeignete stabile N-Oxyl-Radikale sind in der DE-A-19 803 098 beschrieben.

Besonders bevorzugt werden die stabilen N-Oxyl-Radikale 2,2,6,6-Tetramethyl-1-piperidinyloxy (TEMPO), 4-Hydroxy-2,2,6,6-tetramethyl- 1-piperidinyloxy (HO-TEMPO), di-tert.-Butyl-nitroxid (DTBN) eingesetzt.

Es können erfindungsgemäß auch Gemische von stabilen N-Oxyl-Radikalen eingesetzt werden.

Vorzugsweise werden ein stabiles polymerisierbare Doppelbindungen aufweisendes N-Oxyl-Radikal zusammen mit einem weiteren N-Oxyl-Radikal in dem erfindungsgemäßen Verfahren eingesetzt. Dabei ist eine Mischung von MTEMPO und HO-TEMPO besonders bevorzugt.

Der Anteil an MTEMPO in der Mischung der N-Oxyl-Radikale beträgt 10 bis 100 mol-%, bevorzugt 15 bis 100 mol-%, besonders bevorzugt 20 bis 100 mol-%.

Die Polymerisation wird mit mindestens einem radikalischen Polymerisationsinitiator initiiert. Derartige Verbindungen sind dem Fachmann bekannt.

Vorzugsweise werden radikalische Polymerisationsinitiatoren mit einer Zerfallskonstante zwischen $10^{-1}$ und $10^{-5}$ $s^{-1}$ bei 115°C, bevorzugt zwischen $10^{-2}$ und $10^{-4}$ $s^{-1}$, besonders bevorzugt zwischen $10^{-1}$ und $10^{-3}$ $s^{-1}$ eingesetzt.

Es werden organische Peroxide und/oder organische Hydroperoxide als radikalische Polymerisationsinitiatoren eingesetzt.

Ganz besonders bevorzugt sind Dilaurylperoxid und Dibenzoylperoxid, insbesondere Dibenzoylperoxid.

Ebenso sind solche Initiatoren ganz besonders bevorzugt, die eine zyclische Struktur aufweisen. Insbesondere sind zyclische organische Peroxide geeignet. Als Beispiel für zyclische organische Peroxide sei 3,6,9-Triethyl-3,6,9-trimethyl-1,4,7-triperoxonan genannt.

Die Verwendung der genannten zyclischen Initiatoren ermöglicht es, Polymere mit reversibel vernetzten Strukturen herzustellen.

Je nach Aggregatzustand des Initiators und seinem Löslichkeitsverhalten kann er als solcher, bevorzugt jedoch als Lösung, Emulsion (flüssig in flüssig) oder Suspension (fest in flüssig) zugefügt werden, wodurch sich insbesondere kleine Stoffmengen Initiator präziser dosieren lassen. Als Lösungsmittel bzw. flüssige Phase für den Initiator eignen sich organische Lösungsmittel wie Benzol, Toluol, Ethylbenzol und Cyclohexan, insbesondere Cyclohexan oder auch die Monomeren selbst. Bei der Verwendung der Monomeren selbst als Lösungsmittel bzw. flüssige Phase für den Initiator wird der Initiator in der Gesamtmenge der Monomeren oder bevorzugt in einem kleineren Anteil der Monomeren gelöst bzw. emulgiert/suspendiert und dieser Anteil dann zu den restlichen Komponenten gegeben.

Es ist auch möglich, den Initiator im Lösungsmittel oder im Monomeren zu lösen und die entstandene Lösung in Wasser zu dispergieren.

Die Menge an radikalischem Polymerisationsinitiator beträgt üblicherweise 0,05 bis 4 Gew.-%, bevorzugt 0,1 bis 2 Gew.-%, besonders bevorzugt 0,15 bis 1 Gew.-%, bezogen auf die Menge der Monomeren.

Üblicherweise werden die Initiatoren unmittelbar vor Beginn der Polymerisation zugegeben. Es ist aber auch möglich, den Initiator kontinuierlich oder portionsweise während der Polymerisation zuzugeben. Selbstverständlich kann auch eine Mischung aus mehreren Initiatoren verwendet werden.

Als Monomere eignen sich alle ethylenisch ungesättigten Monomere, die radikalisch polymerisierbar sind, also in Gegenwart sogenannter "freier Radikale" polymerisieren.

Als wenigstens eine ethlyenisch ungesättigte Gruppe aufweisende Monomere kommen z.B. in Betracht: Olefine wie Ethlylen oder Propylen, vinylaromatische Monomere wie Styrol, Divinylbenzol, 2-Vinylnaphthalin und 9-Vinylanthracen, substituierte vinylaromatische Monomere wie p-Methylstyrol, α-Methylstyrol, o-Chlorstyrol, p-Chlorstyrol, 2,4-Dimethylstyrol, 4-Vinylbiphenyl und Vinyltoluol, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 20, bevorzugt 1 bis 12, besonders bevorzugt 1 bis 8 und ganz besonders bevorzugt 1 bis 4 C-Atome aufweisenden Alkanolen wie insbesondere Acrylsäure- und Methacrylsäure-, Methyl-, Ethyl-, - n-Butyl-, iso-Butyl-, tert.-Butyl- und -2-Ethylhexylester, Maleinsäuredimethylester oder Maleinsäure-n-butylester, die Nitrile der vorgenannten α,β-monoethylenisch ungesättigten Carbonsäuren wie Acrylnitril und Methacrylnitril sowie $C_{4-8}$konjugierte Diene wie 1,3-Butadien und Isopren.

Als Styrolverbindungen kommen solche der allgemeinen Formel IV in Betracht:

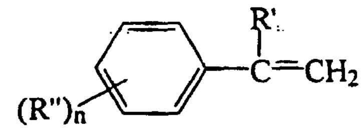

(IV)

in der R' und R" unabhängig voneinander für H oder $C_1$- bis $C_8$-Alkyl und n für 0, 1, 2 oder 3 stehen.

Demgemäß werden in dem erfindungsgemäßen Verfahren vorzugsweise ethylenisch ungesättigte Monomere ausgewählt aus

- Styrolverbindungen der allgemeinen Formel IV,
- $C_1$- bis $C_{20}$-Alkylestem der Acrylsäure oder Methacrylsäure,
- Dienen mit konjugierten Doppelbindungen,
- ethylenisch ungesättigten Dicarbonsäuren und deren Derivate, und
- ethylenisch ungesättigten Nitrilverbindungen eingesetzt.

Besonders bevorzugt werden in dem erfindungsgemäßen Verfahren die Monomere Styrol, α-Methylstyrol, Divinylbenzol, Vinyltoluol, $C_1$- bis $C_8$-Alkyl(meth)-acrylate, insbesondere n-Butylacrylat, 2-Ethylhexylacrylat oder Methylmethacrylat und Butadien, außerdem Acrylnitril sowie Monomerengemische, die zu wenigstens 85 Gew.% aus den vorgenannten Monomeren oder Gemischen der vorgenannten Monomere zusammengesetzt sind, ganz besonders bevorzugt Styrol und Methylmethacrylat, eingesetzt.

Weiterhin kann man bei der Herstellung von Polymerisaten beispielsweise vemetzende Monomere mitverwenden. Vernetzende Monomere sind bi- oder polyfunktionelle Comonomere mit mindestens 2 olefinischen Doppelbindungen, beispielsweise Butadien und Isopren, Divinylester von Dicarbonsäuren wie Bernsteinsäure und Adipinsäure, Diallyl- und Divinylether, bifunktionelle Alkohole wie Ethylenglykol und Butan-1,4-diol, die Ester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols, der unter dem Namen Dihydrodicyclopentadienylacrylat bekannt ist, sowie die Allylester der Acrylsäure und der Methacrylsäure.

Das erfindungsgemäße Verfahren eignet sich für alle bekannten Methoden der freien radikalischen Polymerisation. Bevorzugt wird das erfindungsgemäße Verfahren als Masse (=Bulk)-, Lösungs-, Suspensions-, Mikrosuspensions-, Emulsions- oder Microemulsionspolymerisation, besonders bevorzugt als Masse (=Bulk)-Polymerisation, durchgeführt. Die Polymerisationen können kontinuierlich oder diskontinuierlich durchgeführt werden. Die zur Polymerisation eingesetzten Apparaturen richten sich nach den entsprechenden Polymerisationsverfahren.

In Abhängigkeit vom Polymerisationsverfahren können geeignete weitere Zusätze zugegeben werden. In einem Mikrosuspensionspolymerisationsverfahren können zum Beispiel für die Stabilisierung der Emulsion geeignete Schutzkolloide zugegeben werden. Solche Schutzkolloide sind wasserlösliche Polymere, die die Monomerentröpfchen und die daraus gebildeten Polymerteilchen umhüllen und auf diese Weise vor der Koagulation schützen. Geeignete Schutzkolloide sind in der DE-A-19 803 098 genannt. In Emulsionspolymerisationsverfahren werden des weiteren für die Stabilisierung der Emulsion geeignete Emulgatoren zugegeben. Diese sind seifenartige Hilfsstoffe, die die Monomerentröpfchen umhüllen und auf diese Weise vor dem Zusammenlaufen schützen.

Des weiteren könne Zusatzstoffe zugefügt werden, die den Polymerisaten bestimmte Eigenschaften verleihen. Beispielhaft seien als solche Zusatzstoffe Polymere, Farbstoffe und Pigmente und ferromagnetische Pigmente genannt.

Der Anteil der Zusatzstoffe beträgt in der Regel mindestens 0,1 Gew.%, bevorzugt mindestens 0,5 Gew.%, bezogen auf die Gesamtmasse der Mischung.

Das erfindungsgemäße Verfahren wird bei Temperaturen von 80 bis 200°C, bevorzugt 95 bis 160°C, besonders bevorzugt 100 bis 140°C durchgeführt. Das Gleichgewicht zwischen freien Polymerkettenenden und reversibel durch N-Oxyl-Radikale blockierten Kettenenden ist temperaturabhängig. Bei erhöhter Temperatur liegt eine größere Anzahl von freien Polymerkettenenden vor.

In der Regel ist die Polydispersität der erhaltenen Polymere gering. In einigen Versuchen wurden jedoch auch Polymere mit einer vergleichsweise hohen Polydispersität erhalten. Für Systeme, in denen Styrol in Gegenwart von HO-TEMPO/MTEMPO im Verhältnis 1 : 1 polymerisiert wird, werden Polydispersitäten von bis zu 1,76 und in Gegenwart von MTEMPO Polydispersitäten von bis zu 1,92 erhalten.

Diese hohen Polydispersitäten können vermutlich darin begründet liegen, daß sich durch Einpolymerisation der MTEMPO-Radikale in das herzustellende Polymerisat quasi-vernetzte Polymerisate bilden können. Darin sind die einpolymerisierten MTEMPO-Radikale Radikalfänger für die radikalischen Polymerisatkettenenden der wachsenden Polymerkette und bewirken so eine Vernetzung. Diese Vernetzung ist reversibel, sie kann durch Erhitzen des Polymerisats zerstört werden und durch Abkühlen wiedererhalten werden.

Die Polydispersität dieser Polymerisate kann durch Erhitzen auf Temperaturen von im allgemeinen 80 bis 200 °C, bevorzugt von 90 bis 160 °C, besonders bevorzugt von 100 bis 130 °C, vorzugsweise in Gegenwart von Säure, besonders bevorzugt Ascorbinsäure, erniedrigt werden. Beispielsweise können durch Erhitzen von erfindungsgemäß hergestelltem Polystyrol in Gegenwart von Ascorbinsäure auf 120 °C nach 8 Stunden Polymerisate mit einer Polydispersität von 1,25 erhalten werden. Ähnliche Effekte können durch Behandlung mit Radikalfängern wie Hydrochinon bei den angegebenen Temperaturen erzielt werden.

In Fig. 1 und Fig. 2 der anliegenden Zeichnung ist die Polydispersität von Polystyrol als Funktion der Reaktionszeit mit Ascorbinsäure bei 120 °C dargestellt.

Ein weiterer Gegenstand der vorliegenden Erfindung ist die Verwendung eines oder mehreren der stabilen N-Oxyl-Radikale mit polymerisierbaren Doppelbindungen in der lebenden freien radikalischen Polymerisation eines oder mehrerer ethylenisch ungesättigter Monomere unter Verwendung mindestens eines radikalischen Polymerisationsinitiators ausgewählt aus organischen Peroxiden und/oder organischen Hydroperoxiden.

Die nachfolgenden Beispiele erläutern die Erfindung zusätzlich.

## Beispiele

Beispiel 1 (nicht erfindungsgemäß):

(Proben I bis VI, Vergleichsproben VII, VIII)

Lebende freie radikalische Polymerisation von Methylmethacrylat unter Einsatz polymerisierbarer TEMPO-Derivate als stabile freie Radikale

MTEMPO und HO-TEMPO (insgesamt 0,0015 mol) wurden in verschiedenen Tabelle 1 zu entnehmenden Mischungsverhältnissen in 50 g (0,5 mol) entgastem Methylmethacrylat unter Rühren gelöst. Die Mischung wurde auf 100 °C aufgeheizt und 0,246 g (0,0015 mol) AIBN wurden zugesetzt, um die Polymerisation in Stickstoffatmosphäre zu starten. Die molaren Konzentrationsverhältnisse zu Beginn (t = 0) betrugen: $[AIBN]_0$ = 0,3% $[MMA]_0$, $[HO\text{-}TEMPO]_0$ + $[MTEMPO]_0$ : $[AIBN]_0$ = 1 : 1. Nach verschiedenen Reaktionszeiten (siehe Tabelle 1) wurden Proben entnommen und in flüssigem Stickstoff gequencht, um die Polymerisation zu beenden.

Die Messung des Umsatzes in % wurde mit einem NETZCH T6 209 Gerät durchgeführt. Die Proben wurden in Stickstoff mit einer Aufheizrate von 20 K $min^{-1}$ von 25 °C auf 275 °C aufgeheizt. Der Gewichtsverlust oberhalb von 275 °C ergab den Polymeranteil bzw. der Monomerumsatz.

Die Molekulargewichte wurden durch Gelpermeartionschromatographie an direkt der Mischung entnommenen Proben ermittelt. Die Analyse wird mit Tetrahydrofuran als Eluent mit einer Durchflußrate von 1 ml/min durch drei hintereinandergeschaltete Waters Ultrastyragel Säulen HR4, HR3 und HR1 und ein Waters 410 RI Detektordurchgeführt.

Die experimentellen Ergebnisse sind Tabelle 1 und der Fig. 3 der anliegenden Zeichnung zu entnehmen.

Tabelle 1 :

| Polymerisation von Methylmethacrylat in Gegenwart einer Mischung von TEMPO-Derivaten als stabile freie Radikale | | | | | | |
|---|---|---|---|---|---|---|
| Probe | MTEMPO/HO-TEMPO [mol-%] | Umsatz [%] | Zeit [h] | $M_n$ (x$10^{-3}$) | $M_w$ (x$10^{-3}$) | PD |
| I | 7 : 3 | 60,2 | 1 | 23,7 | 36,8 | 1,55 |
| II | 7:3 | 71,8 | 3 | 23,7 | 34,6 | 1,46 |
| III | 1: 1 | 46,6 | 0,67 | 21,1 | 30,2 | 1,43 |
| IV | 1:1 | 71,9 | 6,2 | 21,0 | 30,8 | 1,47 |
| V | 2:8 | 54,0 | 1 | 20,6 | 30,6 | 1,48 |
| VI | 2:8 | 60,8 | 21 | 20,1 | 30,1 | 1,50 |
| VII | nur HO-TEMPO | 28,4 | 4 | 18,9 | 27,8 | 1,47 |

Tabelle 1 : (fortgesetzt)

| Polymerisation von Methylmethacrylat in Gegenwart einer Mischung von TEMPO-Derivaten als stabile freie Radikale | | | | | | |
|---|---|---|---|---|---|---|
| Probe | MTEMPO/HO-TEMPO [mol-%] | Umsatz [%] | Zeit [h] | $M_n$ ($x10^{-3}$) | $M_w$ ($x10^{-3}$) | PD |
| VIII | nur HO-TEMPO | 60,9 | 32 | 19,3 | 27,0 | 1,40 |

Die Polymerisationsgeschwindigkeit steigt signifikant bei einem Anstieg des MTEMPO/HO-TEMPO-Verhältnisses, während sich die Polydispersität nur geringfügig ändert.

Beispiel 2:

Lebende freie radikalische Polymerisation von Styrol bei Einsatz polymerisierbarer TEMPO-Derivate als stabile freie Radikale.

Die Durchführung der Polymerisation entspricht der in Beispiel 1, mit den Änderungen, daß statt Methylmethacrylat Styrol eingesetzt wird und bei einer Temperatur von 120 °C polymerisiert wird.

Die experimentellen Ergebnisse sind in Fig. 4a und Fig. 4b dargestellt.

Die Ergebnisse zeigen, daß die Polymerisationsgeschwindigkeit eines Systems, in dem ein stabiles freies Radikal mit polymerisierbaren Doppelbindungen eingesetzt wird, um einen Faktor von ca. 2 schneller sind als Systeme, in denen nur ein stabiles freies Radikal ohne polymerisierbare Doppelbindungen eingesetzt wird.

Es zeigen:

**Fig. 1** Polydispersität von Polystyrol als Funktion der Reaktionszeit mit Ascorbinsäure bei 120 °C in Gegenwart von HO-TEMPO und MTEMPO im Verhältnis 1 : 1 Auf der Ordinatenachse ist die Polydispersität und auf der Abszisse ist die Reaktionszeit in Stunden angegeben.

**Fig. 2** Polydispersität von Polystyrol als Funktion der Reaktionszeit mit Ascorbinsäure bei 120 °C in Gegenwart von MTEMPO
Auf der Ordinatenachse ist die Polydispersität und auf der Abszisse ist die Reaktionszeit in Stunden angegeben.

**Fig. 3** experimentelle Ergebnisse aus Beispiel 1
Kinetischer Plot zur lebenden freien radikalischen Polymerisation von Methylmethacrylat bei 100 °C.
Auf der Ordinatenachse ist $Ln([M]_0/[M]_t)$, wobei $[M]_0$ die Monomerenkonzentration zur Polymerisationszeit 0 h ist und $[M]_t$ die Monomerenkonzentration zur Polymerisationszeit t h, und auf der Abszisse ist die Reaktionszeit in Stunden (h) angegeben.
Darin bedeuten:

| | |
|---|---|
| Kreuze: | Plot bei einem molaren Verhältnis MTEMPO : HO-TEMPO = 7 : 3 |
| leere Kreise: | Plot bei einem molaren Verhältnis MTEMPO : HO-TEMPO = 1 : 1 |
| ausgefüllte Kreise: | Plot bei einem molaren Verhältnis MTEMPO : HO-TEMPO=2 : 8 |
| Dreiecke: | nur HO-TEMPO (Vergleichsbeispiel) |

**Fig. 4a** experimentelle Ergebnisse aus Beispiel 2
Kinetischer Plot zur lebenden freien radikalischen Polymerisation von Styrolbei 120 °C.
Auf der Ordinatenachse ist $Ln([M]_0/[M]_t)$ ), wobei $[M]_0$ die Monomerenkonzentration zur Polymerisationszeit 0 h ist und $[M]_t$ die Monomerenkonzentration zur Polymerisationszeit t h, und auf der Abszisse ist die Reaktionszeit in Stunden (h) angegeben.

**Fig. 4b** Molekulargewicht als Funktion des Umsatzes in der lebenden freien radikalischen Polymerisation von Styrol bei 120 °C.
Auf der Ordinatenachse ist das Molekulargewicht $M_n$ (gemessen durch Gel-permeationschromatographie) und auf der Abszisse ist der Umsatz in % angegeben.

In Fig. 4a und Fig. 4b bedeuten:

| | |
|---|---|
| ausgefüllte Kreise: | Plot bei einem molaren Verhältnis HO-TEMPO : Benzoylperoxid (BPO) = 1 : 1 |
| leere Quadrate: | Plot bei einem molaren Verhältnis HO-TEMPO : Benzoylperoxid (BPO) = 1,2 : 1 |
| leere Kreise: | Plot bei einem molaren Verhältnis MTEMPO : HO-TEMPO = 1 : 1 und TEMPO gesamt : BPO = 1 : 1 |
| Dreiecke: | nur MTEMPO, molares Verhältnis MTEMPO : BPO = 1 : 1 |

**Patentansprüche**

1. Verfahren zur lebenden freien radikalischen Polymerisation eines oder mehrerer ethylenisch ungesättigter Monomere unter Verwendung mindestens eines radikalischen Polymerisationsinitiators ausgewählt aus organischen Peroxiden und/oder organischen Hydroperoxiden und in Gegenwart eines oder mehrerer stabiler N-Oxyl-Radikale, **dadurch gekennzeichnet, daß** als stabiles N-Oxyl-Radikal mindestens eine Verbindung der allgemeinen Formel I oder II oder eine Mischung davon eingesetzt wird:

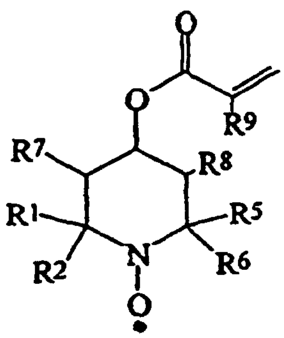
(I)

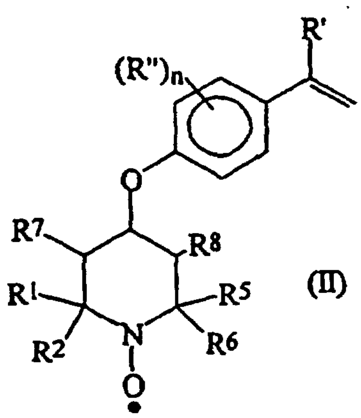
(II)

mit

| | |
|---|---|
| $R^1$, $R^2$, $R^5$, $R^6$ = | unabhängig voneinander gleiche oder verschiedene gerad- oder verzweigtkettige, gegebenenfalls substituierte Alkylgruppen mit 1 bis 32 Kohlenstoffatomen, wobei $R^1$ und $R^2$ bzw. $R^5$ und $R^6$ ein Ringsystem bilden können; |
| $R^7$, $R^8$ = | unabhängig voneinander |

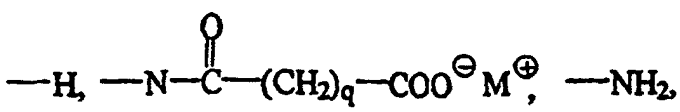

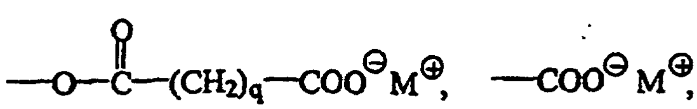

$$-SO_3^{\ominus}M^{\oplus},\ -PO_3^{\ominus}M^{\oplus},\ -O-PO_3^{2\ominus}M_2^{\oplus},$$

$$-O-SO_3^{\ominus}M^{\oplus},\ -OH,\ -O-(CH_2-CH_2-O)_q-H,$$

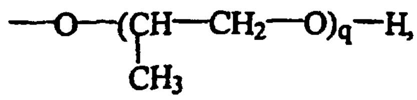

| | |
|---|---|
| $M^+$= | Wasserstoff- oder ein Alkalimetallion, |
| q = | eine ganze Zahl von 1 bis 10; und |
| $R^9$ in Formel I = | Wasserstoff oder $C_1$- bis $C_8$-Alkyl; und |
| R' und R" in Formel II = | unabhängig voneinander Wasserstoff oder $C_1$- bis $C_8$-Alkyl und n = 0, 1, 2 oder 3. |

2. Verfahren nach Anspruch 1, **dadurch gekennzeichnet, daß** 4-Methacryloyloxy-2,2,6,6-tetramethylpipendin-1-oxy (MTEMPO) eingesetzt wird.

3. Verfahren nach Ansprüch 1 oder 2, **dadurch gekennzeichnet, daß** als weitere stabile N-Oxyl-Radikale Verbindungen der allgemeinen Formel III eingesetzt werden:

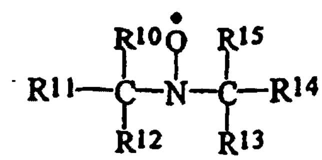 (III)

darin bedeuten $R^{10}$, $R^{11}$, $R^{14}$ und $R^{15}$ = gleiche oder verschiedene gerad-oder verzweigtkettige, gegebenenfalls substituierte Alkylgruppen mit 1 bis 8 Kohlenstoffatomen und
$R^{12}$ und $R^{13}$ = gleiche oder verschiedene gerad- oder verzweigtkettige, gegebenenfalls substituierte Alkylgruppen oder $R^{12}CNCR^{13}$ = einen Teil einer cyclischen Struktur mit einem gegebenenfalls ankondensierten anderen gesättigten oder aromatischen Ring, wobei die cyclische Struktur oder der aromatische Ring gegebenenfalls substituiert sind.

4. Verfahren nach Anspruch 3, **dadurch gekennzeichnet, daß** 2,2,6,6-Tetramethyl-1-piperidinyloxy (TEMPO), 4-Hydroxy-2,2,6,6-tetramethyl-1-piperidinyloxy (HO-TEMPO) oder di-tert.-Butyl-nitroxid (DTBN) als weitere stabile N-Oxyl-Radikale eingesetzt werden können.

5. Verfahren nach Anspruch 4, **dadurch gekennzeichnet, daß** eine Mischung aus MTEMPO und HO-TEMPO eingesetzt wird.

6. Verfahren nach einem der Ansprüche 1 bis 5, **dadurch gekennzeichnet, daß** als radikalischer Polymerisationsinitiator Dibenzoylperoxid oder Dilaurylperoxid oder deren Mischung eingesetzt wird.

7. Verfahren nach einem der Ansprüche 1 bis 6, **dadurch gekennzeichnet, daß** das ethylenisch ungesättigte Monomer ausgewählt ist aus
Styrolverbindungen der allgemeinen Formel IV

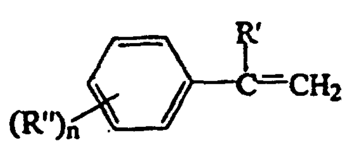 (IV)

in der R' und R" unabhängig voneinander für H oder $C_1$-$C_8$-Alkyl und n für 0, 1, 2, oder 3 stehen,
$C_1$-$C_{20}$-Alkylestem der Acrylsäure oder Methacryläure,
Dienen mit konjugierten Doppelbindungen,
ethylenisch ungesättigten Dicarbonsäuren und deren Derivaten, und ethylenisch ungesättigten Nitritverbindungen.

**8.** Verwendung von stabilen N-Oxyl-Radikalen der allgemeinen Formel I oder II oder einer Mischung davon

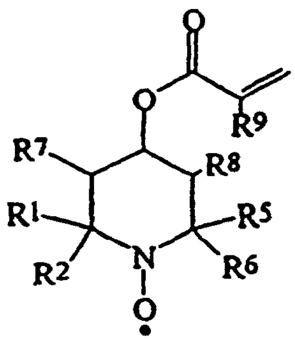 (I) 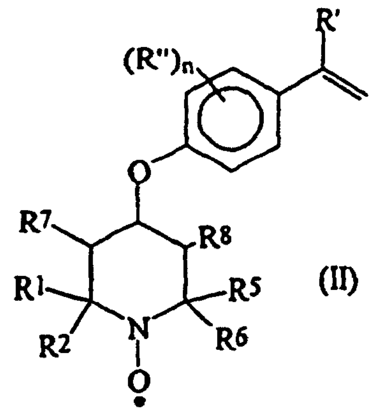 (II)

mit

R¹, R², R⁵, R⁶ = unabhängig voneinander gleiche oder verschiedene gerad- oder verzweigtkettige, gegebenenfalls substituierte Alkylgruppen mit 1 bis 32 Kohlenstoffatomen, wobei $R^1$ und $R^2$ bzw. $R^5$ und $R^6$ ein Ringsystem bilden können;

$R^7$, $R^8$ = unabhängig voneinander

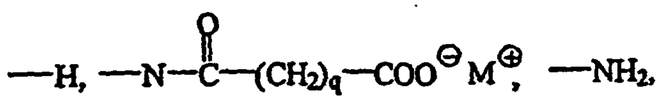

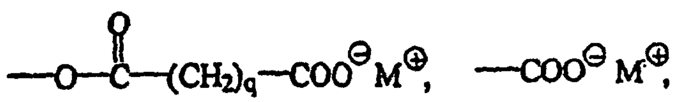

$$-SO_3^{\ominus}M^{\oplus}, -PO_3^{\ominus}M^{\oplus}, -O-PO_3^{2\ominus}M_2^{\oplus},$$

$$-O-SO_3^{\ominus}M^{\oplus}, -OH, -O-(CH_2-CH_2-O)_q-H,$$

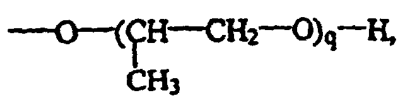

$M^+$ = Wasserstoff oder ein Alkalimetallion,

q = eine ganze Zahl von 1 bis 10; und

$R^9$ in Formel I = Wasserstoff oder $C_1$- bis $C_8$-Alkyl; und

R' und R" in Formel II = unabhängig voneinander Wasserstoff oder $C_1$- bis $C_8$-Alkyl und n = 0, 1, 2 oder 3

in der lebenden freien radikalischen Polymerisation eines oder mehrerer verschiedener ethylenisch ungesättigter Monomere unter Verwendung mindestens eines radikalischen Polymerisationsinitiators ausgewählt aus organischen Peroxiden und/oder organischen Hydroperoxiden.

## Claims

**1.** A process for the living free radical addition polymerization of one or more ethylenically unsaturated monomers using at least one free-radical polymerization initiator selected from organic peroxides and/or organic hydroperoxides and in the presence of one or more stable N-oxyl radicals wherein the stable N-oxyl radical is at least one compound of the formula I or II or a mixture thereof:

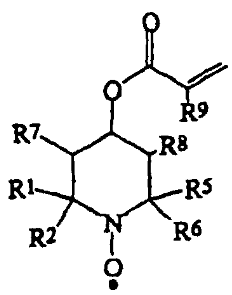 (I) 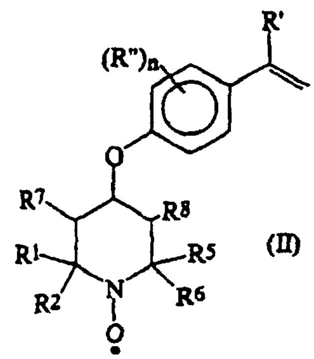 (II)

where

$R^1$, $R^2$, $R^5$, $R^6$ = independently of one another identical or different straight-chain or branched, substituted or unsubstituted alkyl groups having 1 to 32 carbon atoms, it being possible for $R^1$ and $R^2$ and, respectively, $R^5$ and $R^6$ to form a ring system;

$R^7$, $R^8$ = independently of one another

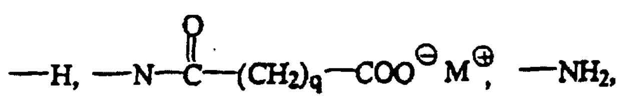

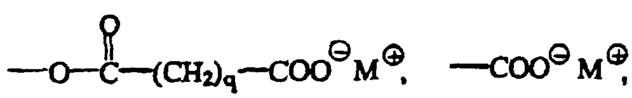

$-SO_3^{\ominus}M^{\oplus}$, $-PO_3^{\ominus}M^{\oplus}$, $-O-PO_3^{2\ominus}M_2^{\oplus}$,

$-O-SO_3^{\ominus}M^{\oplus}$, $-OH$, $-O-(CH_2-CH_2-O)_q-H$,

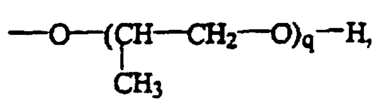

$M^+$ = hydrogen ion or an alkali metal ion,

q = an integer from 1 to 10; and

$R^9$ in formula I = hydrogen or $C_1$-$C_8$ alkyl; and

R' and R" in formula II =independently of one another hydrogen or $C_1$-$C_8$ alkyl and n = 0, 1, 2 or 3.

**2.** A process as claimed in claim 1, wherein 4-methacryloyloxy-2,2,6,6-tetramethylpiperidine-1-oxy (MTEMPO) is used.

**3.** A process as claimed in claim 1 or 2, wherein further stable N-oxyl radicals used are compounds of the formula III:

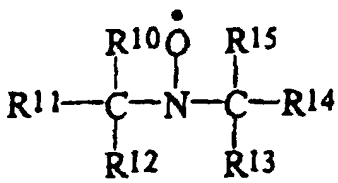

(III)

where $R^{10}$, $R^{11}$, $R^{14}$ and $R^{15}$ = identical or different straight-chain or branched, substituted or unsubstituted alkyl groups having 1 to 8 carbon atoms, and
$R^{12}$ and $R^{13}$ = identical or different straight-chain or branched, substituted or unsubstituted alkyl groups or $R^{12}CNCR^{13}$ = part of a cyclic structure with or without another saturated or aromatic ring fused on, the cyclic structure or the aromatic ring being substituted or unsubstituted.

**4.** A process as claimed in claim 3, wherein 2,2,6,6-tetramethyl-1-piperidinyloxy (TEMPO), 4-hydroxy-2,2,6,6-tetramethyl-1-piperidinyloxy (HO-TEMPO) or di-tert-butyl nitroxide (DTBN) can be used as further stable N-oxyl radicals.

**5.** A process as claimed in claim 4, wherein a mixture of MTEMPO and HO-TEMPO is used.

**6.** A process as claimed in any of claims 1 to 5, wherein dibenzoyl peroxide or dilauryl peroxide or a mixture thereof is used as free-radical polymerization initiator.

**7.** A process as claimed in any of claims 1 to 6, wherein the ethylenically unsaturated monomer is selected from styrene compounds of the formula IV

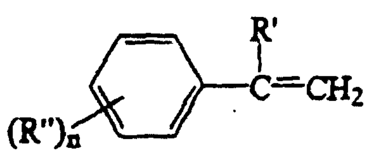

(IV)

where R' and R" independently of one another are H or $C_1$-$C_8$ alkyl and n is 0, 1, 2 or 3,
$C_1$-$C_{20}$ alkyl esters of acrylic acid or methacrylic acid,
dienes having conjugated double bonds,
ethylenically unsaturated dicarboxylic acids and derivatives thereof, and ethylenically unsaturated nitrile compounds.

**8.** The use of stable N-oxyl radicals of the formula I or II or a mixture thereof:

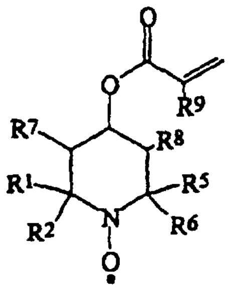 (I) 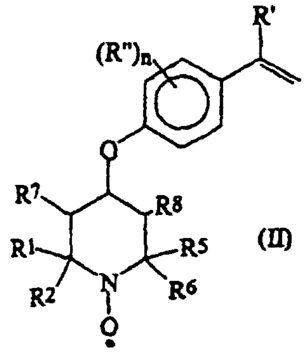 (II)

where

R¹, R², R⁵, R⁶ = independently of one another identical or different straight-chain or branched, substituted or unsubstituted alkyl groups having 1 to 32 carbon atoms, it being possible for $R^1$ and $R^2$ and, respectively, $R^5$ and $R^6$ to form a ring system;

$R^7$, $R^8$ = independently of one another

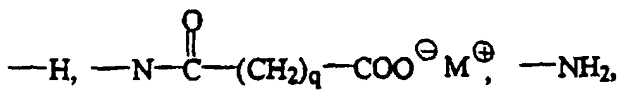

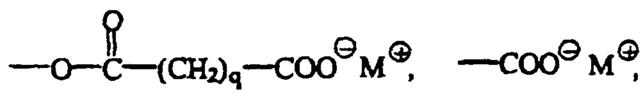

$-SO_3^{\ominus}M^{\oplus}$, $-PO_3^{\ominus}M^{\oplus}$, $-O-PO_3^{2\ominus}M_2^{\oplus}$,

$-O-SO_3^{\ominus}M^{\oplus}$, $-OH$, $-O-(CH_2-CH_2-O)_q-H$,

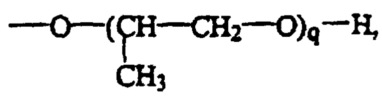

$M^+$ = hydrogen ion or an alkali metal ion,

q = an integer from 1 to 10; and

$R^9$ in formula I = hydrogen or $C_1$-$C_8$ alkyl; and

R' and R" in formula II = independently of one another hydrogen or $C_1$-$C_8$ alkyl and n = 0, 1, 2 or 3,

in the living free radical addition polymerization of one or more different ethylenically unsaturated monomers using at least one free-radical polymerization initiator selected from organic peroxides and/or organic hydroperoxides.

## Revendications

**1.** Procédé de polymérisation radicalaire libre vivante d'un ou de plusieurs monomères éthyléniquement insaturés, en utilisant au moins un initiateur de polymérisation radicalaire choisi parmi les peroxydes organiques et/ou les hydroperoxydes organiques et en présence d'un ou de plusieurs radicaux N-oxyle stables, **caractérisé en ce que** l'on utilise comme radical N-oxyle stable au moins un composé de formule générale I ou II ou un mélange de ceux-ci :

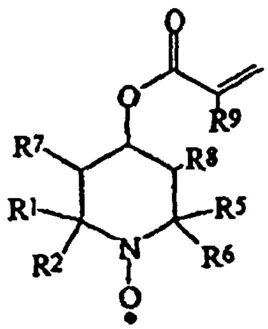
(I)

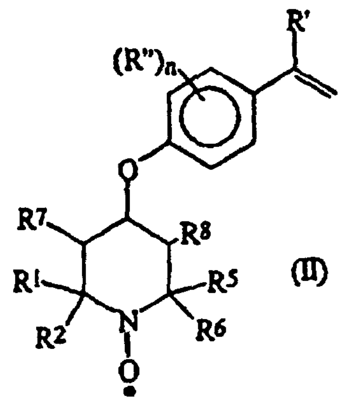
(II)

avec :

$R^1$, $R^2$, $R^5$, $R^6$ = indépendamment les uns des autres, des groupes alkyle identiques ou différents, linéaires ou ramifiés, le cas échéant substitués, ayant de 1 à 32 atomes de carbone, où $R^1$ et $R^2$ ou bien $R^5$ et $R^6$ peuvent former un système cyclique ;
$R^7$, $R^8$ = indépendamment l'un de l'autre,

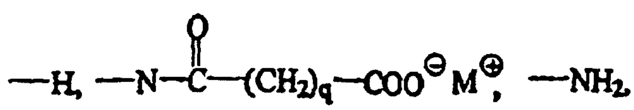

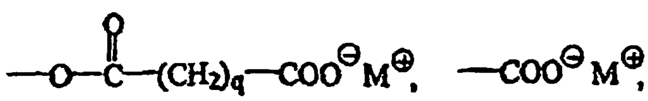

$$-SO_3^{\ominus}M^{\oplus},\ -PO_3^{\ominus}M^{\oplus},\ -O-PO_3^{2\ominus}\ M_2^{\oplus},$$

$$-O-SO_3^{\ominus}M^{\oplus},\ -OH,\ -O-(CH_2-CH_2-O)_q-H,$$

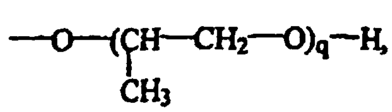

$M^+$ = hydrogène ou un ion de métal alcalin,
q = un nombre entier de 1 à 10 ; et

$R^9$ dans la formule 1 = hydrogène ou alkyle en $C^1$ à $C^8$ ; et
R' et R" dans la formule II = indépendamment l'un de l'autre, hydrogène ou alkyle en $C^1$ à $C^8$ et n = 0, 1, 2 ou 3.

**2.** Procédé selon la revendication 1, **caractérisé en ce que** l'on utilise le 4-méthacryloyloxy-2,2,6,6-tétraméthylpipéridin-1-oxy (MTEMPO).

**3.** Procédé selon la revendication 1 ou 2, **caractérisé en ce que** l'on utilise, comme autres radicaux N-oxyle stables, des composés de formule générale III :

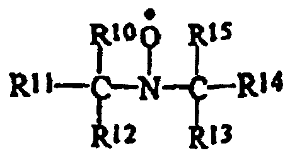

(III)

où signifient

$R^{10}$, $R^{11}$, $R^{14}$ et $R^{15}$ = des groupes alkyle identiques ou différents, linéaires ou ramifiés, le cas échéant substitués, ayant de 1 à 8 atomes de carbone et
$R^{12}$ et $R^{13}$ = des groupes alkyle identiques ou différents, linéaires ou ramifiés, le cas échéant substitués, ou
$R^{12}CNCR^{13}$ = une partie d'une structure cyclique avec un autre cycle saturé ou aromatique, le cas échéant condensé, la structure cyclique ou le cycle aromatique étant le cas échéant substitué.

**4.** Procédé selon la revendication 3, **caractérisé en ce que** l'on peut utiliser, comme autres radicaux N-oxyle stables, le 2,2,6,6-tétraméthyl-1-pipéridinyloxy (TEMPO), le 4-hydroxy-2,2,6,6-tétraméthyl-1-pipéridinyloxy (HO-TEMPO) ou le nitroxyde de di-tert-butyle (DTBN).

**5.** Procédé selon la revendication 4, **caractérisé en ce que** l'on utilise un mélange de MTEMPO et de HO-TEMPO.

**6.** Procédé selon l'une des revendications 1 à 5, **caractérisé en ce que** l'on utilise, comme initiateur de polymérisation radicalaire, le peroxyde de dibenzoyle ou le peroxyde de dilauryle ou leur mélange.

**7.** Procédé selon l'une des revendications 1 à 6, **caractérisé en ce que** le monomère éthyléniquement insaturé est choisi parmi
les composés styrène de formule générale IV :

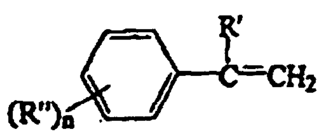

(IV)

où R' et R", indépendamment l'un de l'autre, représentent H ou alkyle en $C_1$-$C_8$ et n représente 0, 1, 2 ou 3,
les esters alkyle en $C_1$-$C_{20}$ de l'acide acrylique ou de l'acide méthacrylique,
les diènes avec des doubles liaisons conjuguées,
les acides dicarboxyliques éthyléniquement insaturés et leurs dérivés et les composés nitrile éthyléniquement insaturés.

**8.** Utilisation des radicaux N-oxyle stables de formule générale 1 ou II ou d'un mélange de ceux-ci :

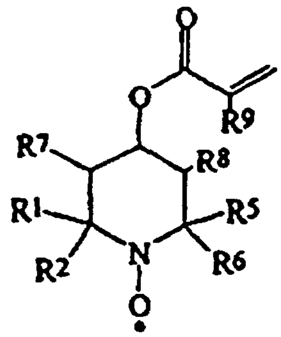 (I) 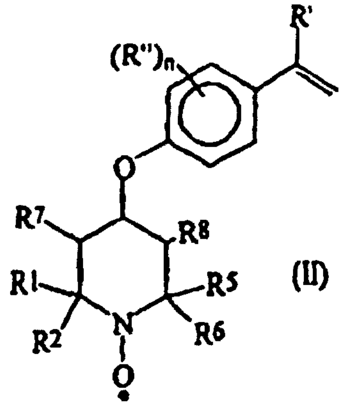 (II)

avec :

$R^1$, $R^2$, $R^5$, $R^6$ = indépendamment les uns des autres, des groupes alkyle identiques ou différents, linéaires ou ramifiés, le cas échéant substitués, ayant de 1 à 32 atomes de carbone, où $R^1$ et $R^2$ ou bien $R^5$ et $R^6$ peuvent former un système cyclique ;
$R^7$, $R^8$ = indépendamment l'un de l'autre,

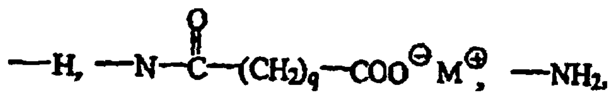

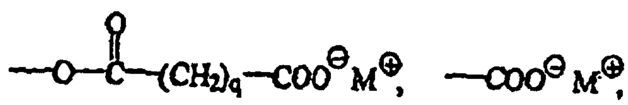

$$-SO_3^{\ominus}M^{\oplus},\ -PO_3^{\ominus}M^{\oplus},\ -O-PO_3^{2\ominus}M_2^{\oplus},$$

$$-O-SO_3^{\ominus}M^{\oplus},\ -OH,\ -O-(CH_2-CH_2-O)_q-H,$$

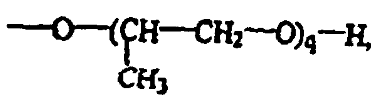

$M^+$ = hydrogène ou un ion de métal alcalin,
q = un nombre entier de 1 à 10 ; et
$R^9$ dans la formule I = hydrogène ou alkyle en $C_1$ à $C_8$ ; et
R' et R'' dans la formule II = indépendamment l'un de l'autre, hydrogène ou alkyle en $C_1$ à $C_8$ et n = 0, 1, 2 ou 3,

dans la polymérisation radicalaire libre vivante d'un ou de plusieurs monomères différents éthyléniquement insaturés, en utilisant au moins un initiateur de polymérisation radicalaire choisi parmi les peroxydes organiques et/ou les hydroperoxydes organiques.

FIG.1

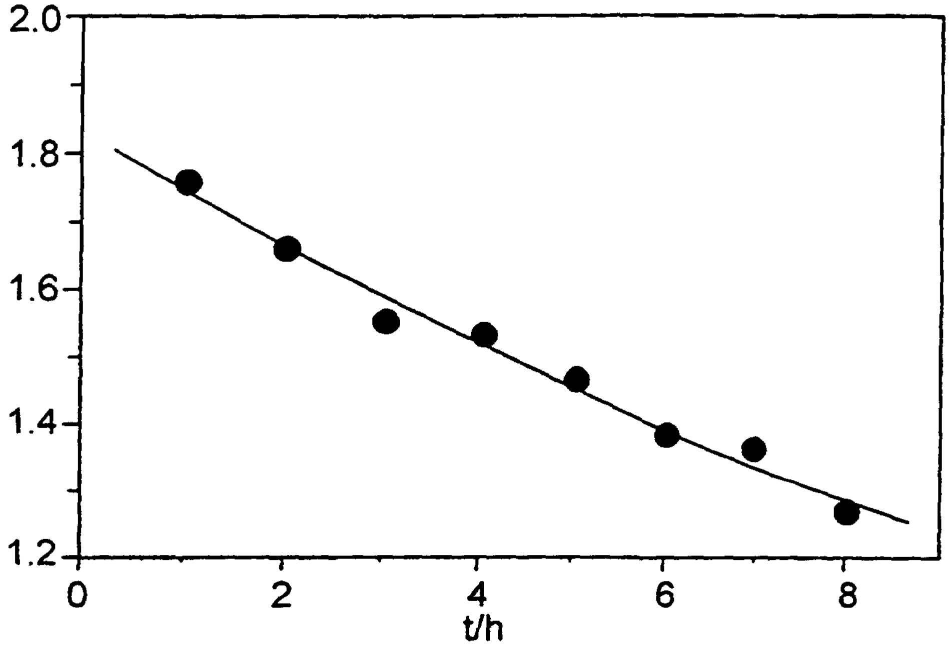


FIG.2

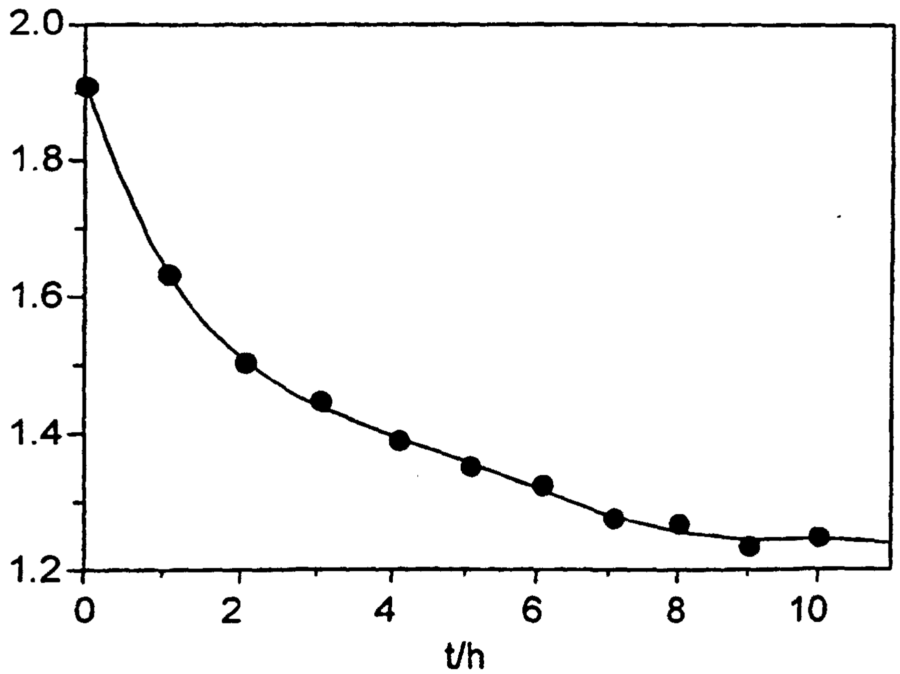

FIG.3

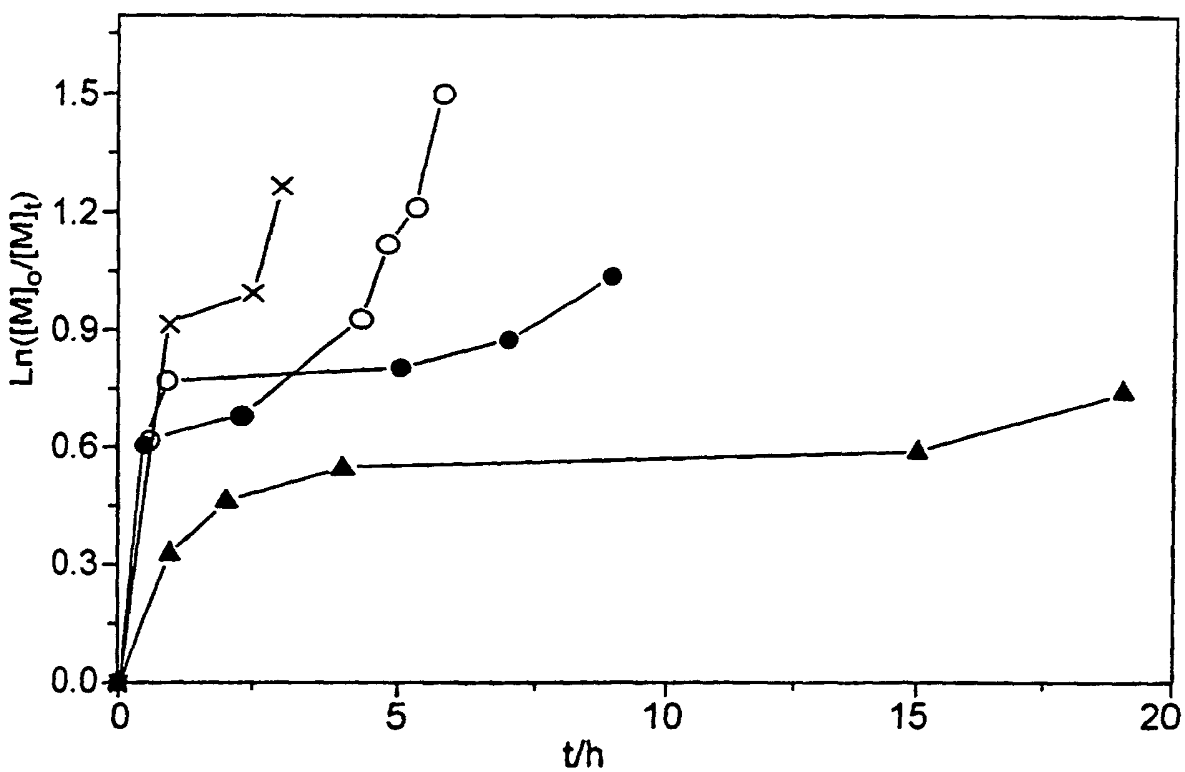

FIG.4A

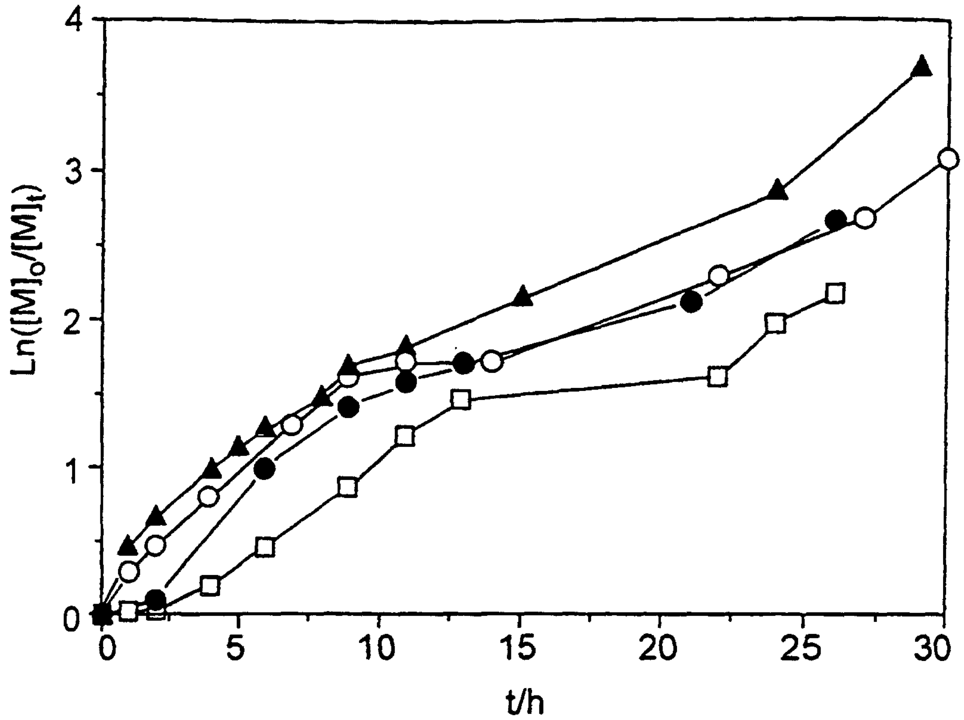
Ln([M]o/[M]t)
t/h
0
1
2
3
4
0
5
10
15
20
25
30

FIG.4B

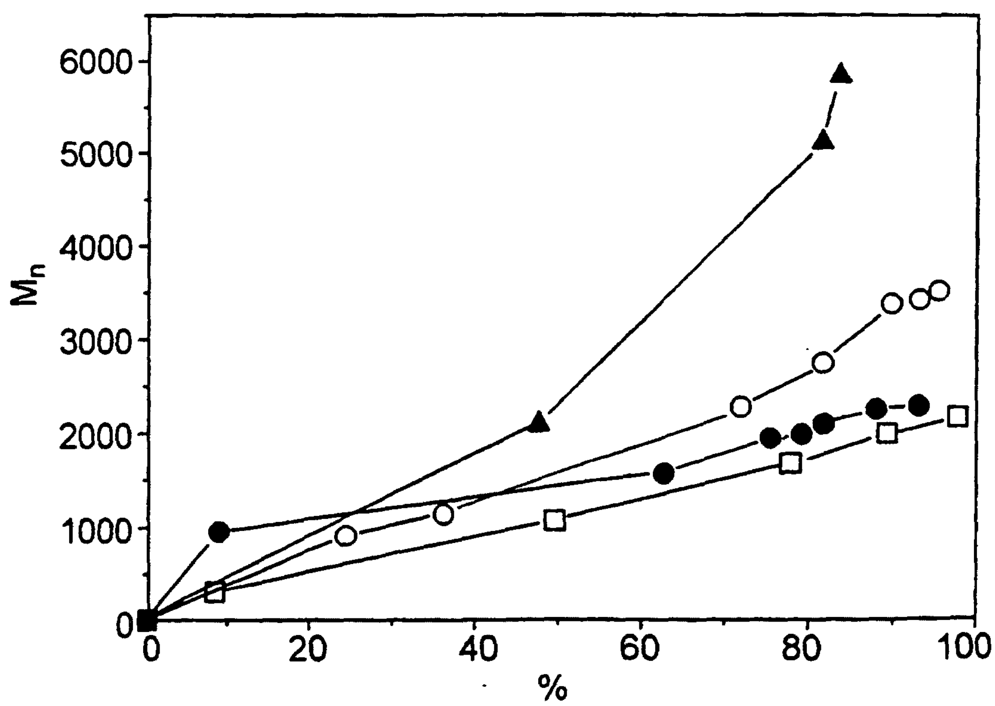
Mn
%
0
1000
2000
3000
4000
5000
6000
0
20
40
60
80
100